# FASCICULE DE BREVET EUROPEEN

(11) **EP 2 494 501 B1**
(45) Date de publication et mention de la délivrance du brevet: **10.07.2013**
(21) Numéro de dépôt: 10782034.2
(22) Date de dépôt: 26.10.2010
(51) Int. Cl.: G06K 19/077

(54) **PROCEDE DE FABRICATION D'UN SUPPORT INTEGRANT UN DISPOSITIF ELECTRONIQUE**
VERFAHREN ZUR HERSTELLUNG EINER AUFLAGERUNG MIT EINER ELEKTRONISCHEN VORRICHTUNG
METHOD FOR PRODUCING A SUPPORT COMPRISING AN ELECTRONIC DEVICE

(30) Priorité: 27.10.2009 FR 0905176
(43) Date de publication de la demande: 05.09.2012
(73) Titulaire: ARJOWIGGINS SECURITY, 92100 Boulogne Billancourt (FR)
(72) Inventeur: LE LOARER, Thibaut, F-38260 Pommier De Beaurepaire (FR); MARLIN, Pascal, F-77120 Coulommiers (FR)
(74) Mandataire: Nony
(86) Numéro de dépôt international: PCT/IB2010/054834
(87) Numéro de publication internationale: WO 2011/051879

(56) Documents cités:
- FR-A1- 2 701 139
- US-A1- 2006 172 458
- US-A1- 2007 141 760

## Description

La présente invention a pour objet un procédé de fabrication d'un support découpable en une pluralité d'unités de support intégrant chacune au moins un dispositif électronique, tel qu'un microcircuit RFID parfois encore appelé puce électronique, ainsi qu'un tel support.

L'invention s'applique par exemple aux documents RFID, notamment aux documents de sécurité tels que des billets de banque, des passeports, des bons de réservation (*vouchers*), des permis de conduire, des cartes à jouer ou à collectionner interactives, des moyens de paiement, notamment des cartes de paiement, des bons d'achats, des cartes de transport, des cartes de fidélité, des cartes de prestations, ou encore des cartes d'abonnement.

L'invention s'intéresse plus particulièrement à un support découpable en une pluralité d'unités de support prêtes à la personnalisation graphique et insérables entre une ou deux couches de nature quelconque, par exemple en polymère, en papier ou en non tissé, ou destinées à être introduites dans un mélange fibreux d'une machine à papier par exemple. De telles unités de support sont communément appelées « planchettes ».

Il est souhaitable, notamment pour protéger et pour rendre plus difficilement détectable un dispositif de sécurité électronique intégré à une unité de support, que ce dispositif électronique soit compensé en épaisseur.

Il est connu par la demande WO2008/67108 d'introduire dans une couche d'un substrat présentant une structure évidée une puce électronique par compression localisée de ladite structure évidée.

La demande US 2007/0141760 enseigne d'introduire une puce électronique à l'intérieur d'un substrat par compression de ce dernier à l'aide d'un outil tel qu'une presse.

La demande US 2008/0291020 enseigne d'introduire une pluralité de planchettes dans un mélange de fibres papetières lors de la fabrication d'un article tel qu'une carte à collectionner.

Le document FR 2701139 A1 décrit un procédé pour implanter un micro-circuit sur un corps de carte intelligente et/ou à mémoire en matière thermoplastique.

Des procédés connus pour introduire un dispositif de sécurité à l'intérieur d'un substrat nécessitent qu'une cavité ait été préalablement ménagée dans ce dernier et/ou l'emploi d'une presse à lamination, ce qui peut s'avérer relativement complexe à mettre en oeuvre, coûteux et inadapté à des cadences de production élevées.

Il existe un besoin pour fabriquer de façon relativement simple, peu coûteuse et en grande quantité des supports intégrant un ou plusieurs dispositifs électroniques tels que des microcircuits RFID, ces dispositifs électroniques agissant par exemple en tant qu'éléments de sécurité.

L'invention a pour objet de répondre à ce besoin et elle y parvient, selon l'un de ses aspects, grâce à un procédé de fabrication d'un support intégrant au moins un dispositif électronique, notamment un microcircuit RFID, ce support comportant au moins une couche fibreuse de papier ou de non tissé incluant au moins 15 % en masse de fibres synthétique, comprenant les étapes consistant à :
- introduire au moins un dispositif électronique au moyen d'au moins un outil preneur-poseur à un emplacement dépourvu de cavité de ladite couche fibreuse, en comprimant ladite couche fibreuse, de telle sorte qu'à l'issue de cette introduction, le ou les dispositifs électroniques soient reçus dans le support sans générer de surépaisseur.

Par « sans générer de surépaisseur » ou « sans générer de surépaisseur sensible », il faut comprendre que l'épaisseur de l'ensemble formé par le support et le dispositif électronique introduit dans le support au droit du dispositif électronique est comprise entre 95 et 105% de celle du support ailleurs.

Le dispositif électronique comporte par exemple un microprocesseur et/ou une mémoire électronique, éventuellement une source d'énergie intégrée.

La teneur massique en fibres synthétiques dans la base fibreuse peut être évaluée par exemple par une mesure tridimensionnelle par stéréologie sur coupe bidimensionnelle au microscope électronique à balayage. Plusieurs images en coupe peuvent être acquises, dans le sens marche de la machine (SM) à papier et dans le sens travers (ST).

Le nombre de fibres synthétiques interceptées par la coupe pour chaque image est compté pour chaque sens papier, à savoir Nₛₜ et Nₛₘ. Le nombre moyen de fibres synthétiques dans le papier est calculé par N=(N_{st.}Nₛₘ)^{1/2}. La longueur totale L de papier comptée est donnée par la somme des longueurs des images comptées. Le nombre de fibres par mètre linéaire de papier est donnée par N/ml=N/L. Le poids de fibres au m² est calculé en utilisant le titre/densité/masse linéique (en dtex) et N/ml à l'aide de la formule suivante : PoidsFS/m² = w = (Pi/2) *N/ml*Titre. Le taux de fibres synthétiques est obtenu en divisant ce poids par le grammage de la base fibreuse.

De préférence, le nombre d'images est suffisant pour compter au moins 400 fibres synthétiques, afin de réduire l'imprécision de la méthode. Les mesures s'effectuent dans les conditions climatiques suivantes : 50 % Humidité relative et 23°C.

La présence des fibres synthétiques peut permettre de réduire la densité du support en créant plus de vides, par rapport à un support qui serait par exemple entièrement réalisé en cellulose.

L'emploi d'un outil preneur-poseur, encore connu sous l'appellation anglo-saxonne d'outil « pick and place », permet d'ajuster la localisation de la dépose du dispositif électronique en fonction du format final désiré. L'emploi d'un tel outil preneur-poseur permet par ailleurs une cadence allant par exemple jusqu'à 10 000 déposes de dispositifs électroniques par heure, permettant au fabricant d'être très réactif à la demande d'un client.

L'introduction du ou des dispositifs électroniques dans le support selon le procédé selon l'invention peut être mise en oeuvre sans étape préalable consistant à former une cavité dans le support pour recevoir chaque dispositif électronique et/ou sans étape consistant à placer le support sous une presse à lamination pour que le ou les dispositifs électroniques soient maintenus dans le support sans générer de surépaisseur dans ce dernier et/ou sans étape consistant à amener au contact de la couche fibreuse en formation le ou les dispositifs électroniques au moyen d'un support de forme allongée telle qu'une bande.

Le dispositif électronique peut comporter un microcircuit. Il peut s'agir d'un microcircuit intégré à communication sans contact, d'un microcircuit à antenne intégrée sur une puce ou d'un microcircuit résonnant, d'un microcircuit à communication par ondes électromagnétiques, et d'un transpondeur, par exemple un micro-transpondeur photo-activable, notamment par un faisceau laser.

Le microcircuit est par exemple programmable ou non. Le microcircuit peut être à lecture seule ou à lecture/écriture.

Le support est par exemple destiné à être découpé en une pluralité d'unités de support de format relativement petit, telles que des planchettes, chaque unité de support comprenant un dispositif électronique.

Lorsque le dispositif électronique comporte un microcircuit à antenne intégrée sur une puce, cette antenne intégrée peut être l'unique antenne d'une unité de support ou peut être couplée à une antenne d'amplification, encore appelée antenne booster, intégrée à l'unité de support. La présence d'une telle antenne booster peut permettre d'accroître la portée de détection de la puce, par exemple d'un facteur égal à 100. En outre, une telle antenne booster peut procurer un moyen de personnalisation du support.

En variante, le dispositif électronique peut être dépourvu d'antenne et configuré pour être connecté à une antenne de l'unité de support, par exemple par soudure, ou à une antenne du document auquel l'unité de support est intégrée.

L'antenne peut être filaire ou autre, par exemple sérigraphiée.

Le support peut comporter au moins une couche d'un adhésif recouvrant la couche fibreuse et définissant, le cas échéant, une face recto du support. L'introduction de dispositif(s) électronique(s) dans le support peut s'effectuer à l'aide de l'outil preneur-poseur à travers la couche d'adhésif.

La couche d'adhésif peut être thermofusible ou comprendre un adhésif sensible à la pression.

Le support peut comporter au moins une couche intermédiaire d'accrochage entre la couche fibreuse et la couche d'adhésif. L'introduction de dispositif(s) électronique(s) peut s'effectuer à l'aide de l'outil preneur-poseur à travers cette couche intermédiaire.

Au moins un, notamment chaque, dispositif électronique peut pénétrer dans la couche fibreuse sur au moins 20 %, par exemple 30 %, voire 50 %, ou 70 %, de l'épaisseur de ladite couche fibreuse.

En variante, au moins un, notamment chaque, dispositif électronique n'est pas reçu dans l'épaisseur de la couche fibreuse, n'étant reçu que dans la couche intermédiaire et/ou la couche d'adhésif.

Le support peut comporter une couche d'impression dépourvue de fibres synthétiques et/ou de fibres cellulosiques et définissant, le cas échéant, la face verso de ce dernier.

Les fibres synthétiques de la couche fibreuse peuvent comporter un mélange d'au moins deux matières thermoplastiques, par exemple de polyamide et de polyester. L'emploi de polyamide permet par exemple d'apporter à la couche fibreuse souplesse et élasticité et l'emploi de polyester peut permettre d'assurer à ladite couche fibreuse une stabilité dimensionnelle en fonction de l'humidité et de la température.

La masse de polyamide est par exemple comprise entre 0,9 et 1,1 fois la masse de polyester dans le support.

La couche fibreuse peut comporter un latex en masse dont la température de transition vitreuse mesurée par DSC (Differential Scanning Calorimetry) est comprise entre - 40°C et + 60°C, notamment entre - 25°C et +50°C.

La couche fibreuse peut présenter une compressibilité comprise entre 10 et 40 %, notamment entre 10 et 30 %, cette compressibilité étant définie par la norme ZWICK et correspondant à la différence d'épaisseur entre une configuration sans contrainte et une configuration sous contrainte de la couche fibreuse.

L'outil preneur-poseur peut être configuré pour chauffer le support et/ou le dispositif électronique, notamment en présence d'une couche d'adhésif thermofusible devant être traversée lors de l'insertion du dispositif électronique.

Le chauffage peut s'effectuer à une température supérieure ou égale à 80°C

Le procédé peut comporter l'étape selon laquelle on procède au couchage hors ligne ou en ligne d'un vernis thermoscellant sur l'une au moins de la face de la couche d'adhésif opposée à la couche fibreuse et de la face de la couche d'impression opposée à la couche fibreuse.

Une première couche de vernis est par exemple couchée sur la couche d'adhésif, de manière à ce que la couche d'adhésif soit prise en sandwich entre la première couche de vernis d'une part et la couche fibreuse ou la couche intermédiaire d'autre part, cette première couche de vernis définissant la face recto du support. Une telle couche de vernis peut améliorer la protection du dispositif électronique introduit dans le support.

Une deuxième couche de vernis est par exemple couchée sur la couche d'impression, de manière à ce que cette dernière soit prise en sandwich entre la couche fibreuse et la deuxième couche de vernis, cette deuxième couche de vernis définissant la face verso du support.

Lorsque les unités de support découpées à partir du support sont destinées à être intégrées à un article fibreux, par exemple papetier, l'emploi d'un tel vernis peut favoriser l'accrochage d'unités de support dans l'article.

En variante, seule la première couche de vernis est couchée sur la couche d'adhésif à travers laquelle le ou les dispositifs électroniques sont introduits, et une impression est effectuée sur la couche d'impression. Cette impression correspond par exemple à un aplat d'encre invisible à l'oeil nu et visible sous lumière UV. Cette impression peut être effectuée au droit du dispositif électronique et constituer un repère lors d'une étape ultérieure de découpe du support.

Le vernis contient par exemple une encre fluorescente et peut présenter des propriétés adhésives.

Cette étape de couchage de vernis est notamment favorisée par l'introduction sans générer de surépaisseur de dispositif(s) électronique(s) dans le support.

Lors d'une étape ultérieure, le support, avec ou sans couche(s) de vernis, peut être découpé, par exemple au laser pour réaliser les unités de support. Chaque unité de support peut contenir un ou plusieurs dispositifs électroniques. Alternativement, le support peut être découpé par deux cylindres coaxiaux successifs, chacun des cylindres portant un motif de découpe complémentaire qui s'entrecroise avec l'autre motif de manière à constituer un motif résultant qui formera l'unité de support, comme décrit dans le brevet EP1718441.

La surface d'une unité de support est avantageusement supérieure à celle du dispositif électronique, ce dernier étant par exemple entièrement situé à l'intérieur de la surface de l'unité de support. Avantageusement le découpage des unités de support est effectué au repère de sorte que le dispositif électronique soit disposé de manière repérée par rapport à la forme de l'unité de support.

Les unités de support peuvent être découpées de façon à présenter une forme décorative, par exemple un motif géométrique tel qu'une ellipse, un cercle, un polygone, un rectangle, un carré, une étoile. En variante, les unités de support peuvent définir un symbole d'écriture, notamment un caractère alphanumérique, ou une image d'un objet reconnaissable, comme un animal, un végétal, un logo ou un personnage.

Lorsqu'une impression a été déposée sur la couche d'impression au droit du dispositif électronique, l'unité de support peut être découpée selon le contour extérieur du motif ou de l'aplat déposé.

Les unités de support peuvent avoir un format relativement petit, étant par exemple des planchettes.

Chaque unité de support présente par exemple une plus grande dimension comprise entre 0,5 et 5 millimètres.

L'invention a encore pour objet, selon un autre de ses aspects, un procédé de fabrication d'un document de sécurité comprenant un substrat fibreux, dans lequel :
- la face recto d'au moins une unité de support telle que définie ci-dessus est rapportée sur une face d'un substrat de l'article ou,
- au moins une unité de support telle que définie ci-dessus est introduite dans une dispersion de matière fibreuse destinée à former le substrat fibreux du document de sécurité dans une machine à papier.

La quantité d'unités de support introduites dans le mélange de fibres en machine est par exemple calculée de façon à ce que ledit mélange soit homogène en nombre d'unités de support, permettant que la probabilité d'avoir le même nombre d'unités de support par article soit grande.

Au moins un dispositif électronique du substrat peut être hors d'usage, ayant par exemple été endommagé lors de la découpe des unités de support.

L'article est par exemple un document et l'invention peut permettre d'introduire un ou plusieurs dispositifs électroniques à l'intérieur d'un document, par exemple papetier, sans effectuer de mise au repère sur le document.

Par ailleurs, par rapport à l'introduction d'un dispositif électronique dans une machine de fabrication d'un substrat fibreux, selon l'invention les dispositifs électroniques introduits ont été préalablement intégrés au support, ce dernier comportant des couches protégeant le dispositif électronique.

Dans un mode de réalisation particulier de l'invention, les unités de support comportent chacune un trou traversant ou une perforation intérieure et un dispositif électronique introduit de la manière décrite ci-dessus et disposé sur l'unité de support mais en dehors de la perforation. Un tel trou traversant ou une telle perforation peut permettre d'améliorer la tenue des unités de support dans le substrat fibreux.

Dans un autre mode de réalisation particulier de l'invention, le support, intégrant au moins un dispositif électronique et étant obtenu à l'aide du procédé défini ci-dessus, se présente en forme de bande ou de ruban et il est introduit en machine à papier dans une dispersion de matière fibreuse qui est destinée à former le substrat fibreux du document de sécurité. De préférence le support intègre plusieurs dispositifs électroniques qui, du fait de leur introduction en bande, sont disposés dans une zone localisée du document de sécurité, ce qui facilite notamment la lecture des dispositifs électroniques. Par exemple, la bande de sécurité ainsi constituée a une largeur comprise entre 2 et 60 mm, de préférence entre 4 et 30 mm et plus préférentiellement entre 10 et 20 mm.

L'article peut être un document de sécurité tel qu'un passeport ou un permis de conduire et le substrat et l'unité de support peuvent définir au moins en partie la couverture de ce document de sécurité.

L'invention a encore pour objet, selon un autre de ses aspects, un support intégrant au moins un dispositif électronique, obtenu à l'aide du procédé défini ci-dessus.

L'invention a encore pour objet, selon un autre de ses aspects, un support intégrant au moins un dispositif électronique, le support comportant :
- au moins une couche fibreuse comportant au moins 15 % en masse de fibres synthétiques,
- une couche d'un adhésif définissant une face recto du support et,
- le dispositif électronique reçu sans surépaisseur dans le support, engagé dans la couche d'adhésif et dans au moins une portion de l'épaisseur de la couche fibreuse.

L'invention a encore pour objet, selon un autre de ses aspects, un document de sécurité tel qu'un passeport, une carte d'identité, un permis de conduire, une carte à jouer ou à collectionner interactive, un moyen de paiement, notamment une carte de paiement, un bon d'achat ou un voucher, une carte de transport, une carte de fidélité, une carte de prestations, une carte d'abonnement, fabriqué comme mentionné ci-dessus..

L'invention a encore pour objet, selon un autre de ses aspects, un substrat fibreux pour la réalisation d'un article, notamment d'un document tel qu'un document de sécurité, ledit substrat comportant une pluralité d'unités de support comportant chacune au moins un dispositif électronique reçu à l'intérieur de ladite unité de support sans générer de surépaisseur.

Au moins un des dispositifs électroniques peut contenir des informations lui étant propres et des informations se rapportant à d'autres dispositifs électroniques du substrat fibreux.

Au moins l'un des dispositifs électroniques du substrat peut être hors d'usage.

Les unités de support peuvent présenter les mêmes caractéristiques que celles obtenues à l'issue du procédé de fabrication du support décrit ci-dessus.

Au moins une unité de support ou le substrat fibreux peut comporter en outre au moins un élément de sécurité dit "de premier niveau" détectable à l'oeil nu en lumière visible et sans utilisation d'un appareil particulier et/ou au moins un élément de sécurité dit "de deuxième niveau" détectable seulement à l'aide d'un appareil telle qu'une lampe émettant dans l'ultraviolet ou l'infrarouge et/ou au moins un autre élément de sécurité dit "de troisième niveau" comportant un traceur capable de générer un signal spécifique lorsque soumis à une excitation optoélectronique ou un marqueur chimique ou « tagant » adapté.

L'invention a encore pour objet, selon un autre de ses aspects, un procédé d'authentification et/ou d'identification d'un document de sécurité comportant un substrat fibreux comportant une pluralité d'unités de support recevant chacune au moins un dispositif électronique sans surépaisseur, les unités de support étant notamment telles que décrites ci-dessus, le document comportant au moins un identifiant, notamment inscrit sur le document, et un code étant affecté à chaque dispositif électronique de chaque unité de support,
procédé dans lequel :
- on détermine un code résultant de l'association des codes des dispositifs électroniques du document de sécurité,
- on lit l'identifiant du document, par exemple visuellement ou automatiquement et,
- on détermine si une relation prédéfinie entre l'identifiant du document et le code résultant est satisfaite, de façon à identifier et/ou authentifier l'article.

Le terme "code" doit être compris au sens large, désignant par exemple aussi bien des numéros, des lettres enregistrées dans une mémoire d'une puce que, dans le cas d'un microcircuit résonnant, un signal résonnant.

La mise en relation entre le code et l'identifiant correspond par exemple à une opération de comparaison ou à une fonction plus complexe, une partie du code étant par exemple cryptée ou décryptée.

Le même code, ou plusieurs codes distincts, peuvent être associés à plusieurs dispositifs électroniques de l'article et, lors de la détermination, ces codes peuvent être lus. Un code global peut être déterminé, par exemple par concaténation, à partir des codes lus, et ce code global peut être mis en relation avec l'identifiant de l'article. L'identifiant de l'article est par exemple un numéro égal au code global. En variante, cet identifiant peut être distinct du code global, assurant l'unicité de l'authentification.

L'article est par exemple fabriqué à partir du substrat fibreux ci-dessus.

L'invention pourra être mieux comprise à la lecture de la description qui va suivre, d'exemples non limitatifs de mise en oeuvre de celle-ci, et à l'examen du dessin annexé, sur lequel :
- la figure 1 représente de façon schématique des exemples d'étapes lors d'un procédé de fabrication selon un premier exemple de mise en oeuvre de l'invention,
- les figures 2 et 3 sont des vues en coupe de différents exemples de supports obtenus à l'aide du procédé selon l'invention,
- la figure 4 est une vue de dessus d'un autre exemple de support obtenu à l'aide du procédé selon l'invention,
- la figure 5 représente de façon schématique des exemples d'étapes lors d'un procédé de fabrication selon un autre exemple de mise en oeuvre de l'invention et,
- les figures 6 à 9 représentent des exemples de supports lors des étapes du procédé représenté à la figure 5.

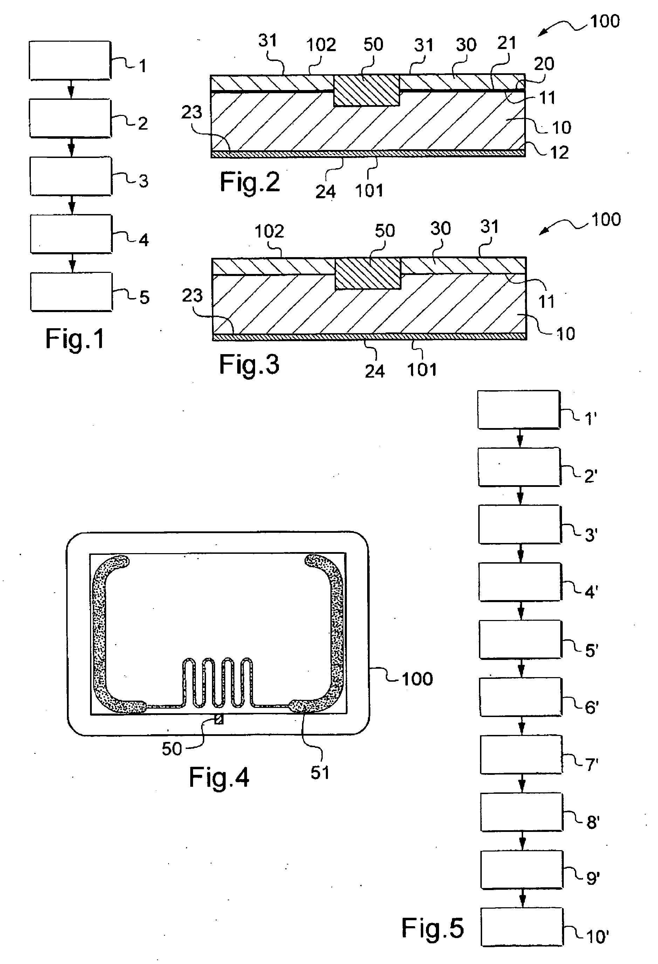

On va décrire en référence aux figures 1 et 2, de façon schématique, des étapes d'un procédé de fabrication d'un support 100 pouvant être découpé en unités de support, selon un premier exemple de mise en oeuvre de l'invention.

Lors d'une étape 1, on fabrique une couche fibreuse 10, par exemple par la voie papetière, qui inclut au moins 15 % en masse de fibres synthétiques. Les fibres synthétiques comportent par exemple un mélange de polyamide et de polyester en proportions sensiblement égales. Les fibres synthétiques ont par exemple une longueur d'au moins 3 mm et un diamètre d'au mo ins 10 µm.

La couche fibreuse 10 peut comporter des fibres cellulosiques, par exemple des fibres issues d'eucalyptus et de pin.

Cette couche fibreuse 10 peut être saturée en latex en masse, ce dernier présentant par exemple une température de transition vitreuse comprise entre -40°C et +60°C et peut être par exemple de nature styrene butadiene.

La couche fibreuse 10 peut présenter une compressibilité comprise entre 10 et 40 %, notamment entre 10 et 30 %, par exemple égale à 15 %.

La couche fibreuse 10 peut présenter une épaisseur comprise entre 70 et 400 µm.

Lors d'une étape 2, on procède au couchage en ligne, par exemple à l'aide d'une machine TWIN™ HSM, ou au couchage hors ligne, sur une face 11 de ladite couche fibreuse 10, d'une couche intermédiaire chargée 20 permettant l'accrochage entre la couche fibreuse 10 et une couche d'adhésif. Lors de cette étape 2, on peut également procéder au couchage en ligne ou hors-ligne d'une couche d'impression 23 dépourvue de fibres synthétiques sur la face 12 de la couche fibreuse 10 opposée à la face 11 recevant la couche intermédiaire 20. La couche intermédiaire 20 contient par exemple des charges minérales et du latex et la quantité couchée est par exemple comprise entre 5 et 50 g/m²

La couche d'impression 23 est avantageusement choisie en fonction du type d'impression souhaité pour la personnalisation du document final auquel le support 100 est destiné à être intégré, cette impression étant par exemple une impression hélio, une impression offset, une impression par jet d'encre ou encore une impression indigo. La couche d'impression 23 présente une face 24 opposée à la couche fibreuse qui peut définir la face verso 101 du support 100.

Lors d'une étape 3, on procède au couchage en ligne, par exemple toujours à l'aide d'une machine TWIN™ HSM, ou à un couchage hors ligne, sur la face 21 de la couche intermédiaire 20 d'une couche d'adhésif 30. Cette dernière présente une face 31 opposée à la couche 20 qui peut définir la face recto 102 du support 100.

L'adhésif 30 est par exemple un adhésif thermofusible ou sensible à la pression. L'adhésif 30 est par exemple réalisé à base de polyuréthane ou d'acrylique et la couche 30 peut présenter une épaisseur d'au moins 10 micromètres. La dépose de la couche d'adhésif 30 est notamment comprise entre 5 et 25 g/m², notamment d'environ 15 g/m², voire de 10 g/m². Dans un exemple, l'adhésif est acrylique et déposé à 15 g/m².

Lors d'une étape 4, il est procédé à l'amenée du support au poste de dépose des dispositifs électroniques 50.

Les dispositifs électroniques 50 comportent par exemple des microcircuits du type puces à communication sans contact. Ces puces peuvent comporter une antenne intégrée, étant par exemple des puces dites AOB (antenna on board) ou OCA (on chip antenna). Un exemple de telles puces OCA est par exemple décrit sur le site internet http://www.fecine.com.my/mmchip/mm on chip antenna.htm. Des puces AOB convenant tout particulièrement peuvent présenter une épaisseur comprise entre 60 et 80 µm, par exemple de 70 µm, et une largeur comprise entre 30 et 50 µm, par exemple de 40 µm. En variante, le dispositif électronique 6 comporte un microcircuit résonnant, un microcircuit à communication par ondes électromagnétiques ou un micro transpondeur réagissant à un faisceau de lumière diffuse. Le support 100 peut être dépourvu de toute autre antenne que celle du microcircuit 50, notamment celle intégrée à la puce dudit microcircuit. En variante, le support 100 comporte au moins une antenne booster 51, comme représenté sur la figure 4. Cette antenne booster 51 est par exemple réalisée par impression, gravure, sérigraphie ou est filaire.

Cette antenne booster 51 peut être couplée électromagnétiquement à l'antenne intégrée à la puce d'un dispositif électronique 50 et elle peut présenter une forme décorative, par exemple un motif géométrique tel qu'une ellipse, un cercle, un polygone, un rectangle, un carré, une étoile. En variante, l'antenne booster 51 peut définir un symbole d'écriture, notamment un caractère alphanumérique, ou une image d'un objet reconnaissable, comme un animal, un végétal, un logo ou un personnage. Dans l'exemple de la figure 4, l'antenne booster 51 représente schématiquement un papillon. L'antenne booster 51 peut former une boucle ou non.

Dans une autre variante, non représentée, le dispositif électronique 50 comporte une antenne distincte de la puce.

Lors d'une étape 5, le dispositif électronique 50 est déposé à l'aide d'un outil preneur-poseur, par exemple tel que celui commercialisé par la société DATACON®.

L'outil preneur-poseur est par exemple configuré pour chauffer le dispositif électronique 50 et/ou le support 100, préalablement à l'enfoncement du dispositif électronique 50 à l'intérieur du support 100.

Lors de cette étape 5, le dispositif électronique 50 est par exemple extrait par l'outil preneur-poseur d'une galette, encore appelée « wafer », comportant un grand nombre de tels éléments de tels dispositifs 50, puis est positionné de manière précise et paramétrable sur le support destiné à l'accueillir dans son épaisseur.

Lorsque le dispositif électronique 50 est une puce AOB ou OCA, le dispositif électronique 50 peut être introduit dans le support 100 de façon à ce que la face de la puce 50 portant l'antenne repose à l'intérieur du support 100 face à la couche fibreuse 10.

Le dispositif électronique 50 peut être enfoncé à travers la couche 30 du support par l'outil preneur-poseur et se retrouve à l'intérieur du support 100 en comprimant les couches 10 et 20. A l'issue de cette étape 5, le dispositif électronique est présent dans le support 100 sans générer de surépaisseur sensible. Le support présente par exemple au droit du dispositif électronique la même épaisseur qu'ailleurs à 10 µm près.

Lors d'une étape ultérieure 6, on peut découper le support 100 en une pluralité d'unités de support et utiliser, pour fabriquer un article, au moins une de ces unités de support. Chaque face recto 102 d'une unité de support est par exemple rapportée sur une face d'un substrat d'un document de sécurité tel qu'un passeport ou un permis de conduire, de façon à définir avec ledit substrat en partie au moins une couverture de l'article.

Les unités de support obtenues à l'aide du procédé décrit ci-dessus peuvent encore être utilisées pour réaliser des documents de sécurité tels que des cartes d'identité, des cartes à jouer ou à collectionner interactives, des moyens de paiement, notamment des cartes de paiement, des bons d'achats, des cartes de transport, des cartes de fidélité, des cartes de prestations, ou encore des cartes d'abonnement.

Selon un exemple particulier de mise en oeuvre de l'invention, la couche fibreuse 10 est fabriquée par la société ARJOWIGGINS SECURITY à l'aide d'une machine table plate, cette couche 10 comportant 15 % de fibres synthétiques pour moitié en polyamide et pour moitié polyester. La couche d'adhésif 30 est par exemple de type acrylique et la couche d'impression 23 est adaptée à une impression offset. Le dispositif électronique 50 est selon cet exemple une puce MM2 commercialisée par la société FEC®, cette puce 50 comportant le cas échéant une antenne intégrée.

L'invention n'est pas limitée à la mise en oeuvre de l'ensemble des étapes 1 à 5 décrites ci-dessus pour réaliser le support.

Dans la variante de la figure 3, le support est dépourvu de couche intermédiaire 20, et les étapes 2 et 3 décrites ci-dessus sont remplacées par une seule étape au cours de laquelle on procède par exemple à un couchage bi-face de la couche d'adhésif 30 et de la couche d'impression 23.

Dans une autre variante, le support est dépourvu de couche d'impression 23, c'est-à-dire que sa face verso 101 est définie par la face 12 de la couche fibreuse, le support 100 pouvant être ultérieurement inséré entre deux couches de papier imprimable.

Dans une autre variante, on dispose d'une couche fibreuse 10 préalablement fabriquée, lorsque l'on met en oeuvre le procédé.

On va maintenant décrire en référence aux figures 5 à 9 un procédé de fabrication selon un deuxième exemple de mise en oeuvre de l'invention.

Les étapes 1' à 4' sont par exemple similaires aux étapes 1 à 4 décrites en référence aux figures 1 à 4.

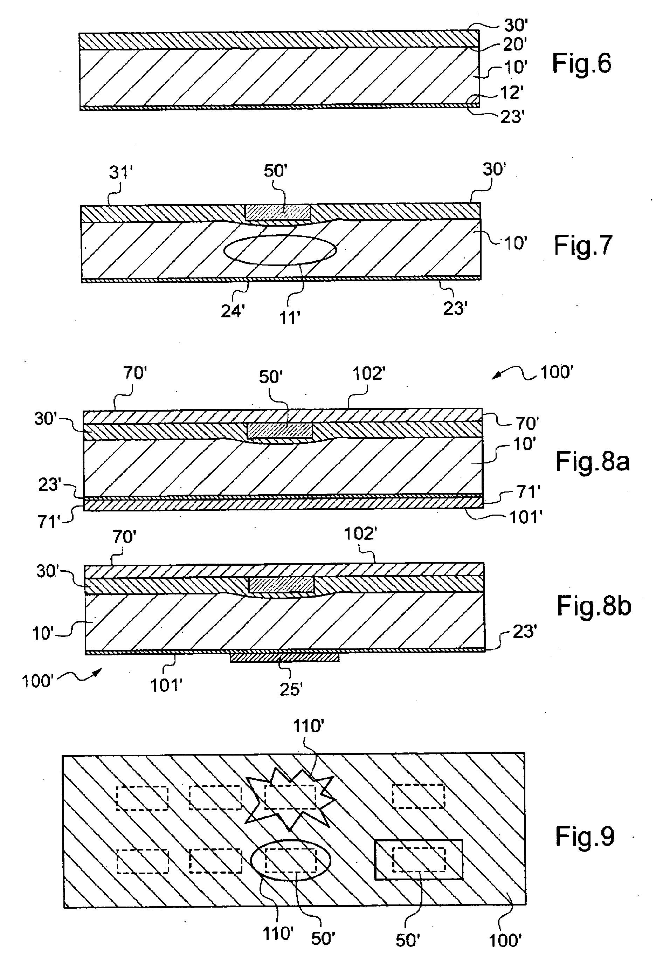

On a représenté à la figure 6 un exemple de structure multicouche obtenue à l'issue de l'étape 3'. La couche fibreuse 10' présente par exemple une compressibilité d'au moins 15 %. La couche intermédiaire 20' est prise en sandwich entre la couche fibreuse 10' et la couche d'adhésif 30' qui présente par exemple une épaisseur d'au moins 5 µm, notamment d'environ 15 µm.

La structure peut comporter ou non une couche d'impression 23' déposée sur une face 12' de la couche fibreuse 10'. Cette couche d'impression est par exemple chargée avec un ou plusieurs pigments visibles ou invisibles en lumière UV et présente par exemple une épaisseur d'au moins 5 µm, étant par exemple égale à 15 µm.

Les couches 10', 20', 23' et 30' sont par exemple déposées en ligne sur une machine à papier.

Lors d'une étape 5' représentée sur la figure 7, au moins un dispositif électronique 50', qui est par exemple tel que décrit ci-dessus, est introduit dans la structure multicouche. Contrairement à l'exemple décrit en référence aux figures 1 à 4, le dispositif électronique 50' n'est reçu que dans l'épaisseur de la couche d'adhésif 30' et non à l'intérieur de la couche fibreuse 10', l'introduction du dispositif électronique 50' induisant une zone comprimée 11' de la couche fibreuse 10'.

Lorsque le dispositif électronique 50' comporte une puce à antenne intégrée, ce dispositif 50' peut être introduit à l'intérieur de la couche d'adhésif 30' de façon à ce que la face de la puce portant l'antenne repose en regard de la couche fibreuse 10'. L'antenne est ainsi protégée.

Comme on peut le constater, à l'issue de cette étape 5', le dispositif électronique 50' repose dans la couche d'adhésif 30' sans générer de surépaisseur puisque la variation d'épaisseur générée par l'introduction du dispositif électronique est compensée par la couche fibreuse 10' au droit du dispositif électronique 50'.

Dans l'exemple illustré, le procédé comporte encore une étape 7' dans laquelle un vernis thermoscellant, par exemple de l'acrylique ou du polyuréthane, est couché sur au moins une parmi la couche d'adhésif 30' et la couche d'impression 23'. Ce vernis thermoscellant peut être déposé par couchage en ligne à l'aide d'une machine TWIN™ HSM ou selon les méthodes dites « lame d'air » ou « couchage Champion ». En variante, le vernis est déposé par couchage hors ligne, par exemple selon les méthodes dites « lame d'air », « couchage Champion » ou « offset ».

Dans l'exemple de la figure 8a, le support 100' comporte une première couche de vernis 70' couchée sur la face 31' de la couche d'adhésif 30' définissant la face recto de la structure obtenue à l'issue de l'étape 3' et une deuxième couche de vernis 71' couchée sur la face 24' de la couche d'impression 23' définissant la face verso de ladite structure.

La première, respectivement deuxième, couche de vernis peut alors définir la face recto 102', respectivement verso 101', du support 100' obtenu.

Dans l'exemple de la figure 8b, le support 100' est dépourvu de deuxième couche de vernis 71', seule la couche d'adhésif 30' étant revêtue de la couche de vernis thermoscellant 70'. Lorsque la couche d'impression 23' n'est pas recouverte par une couche de vernis, un motif ou un aplat 25' peut être imprimé sur cette dernière, par exemple avec une encre de sécurité. Cette impression est par exemple effectuée à l'aide d'encre visible ou invisible selon la lumière et au droit du dispositif électronique 50'.

On imprime par exemple un drapeau avec des encres de couleur au droit du dispositif électronique 50'. Lorsque vu de dessus, le dispositif électronique 50' peut être situé à l'intérieur du contour extérieur du motif ou de l'aplat 25'.

Lors d'une étape 8', il est procédé à la découpe du support 100' en une pluralité d'unités 110' de format relativement petit telles que des planchettes, chaque unité comportant au moins un dispositif électronique 50'. Cette découpe s'effectue par exemple par laser. Lorsqu'un motif ou un aplat 25' a été déposé à l'étape 7', cette étape 8' peut être registrée sur l'impression déposée. De cette manière le dispositif électronique et le motif 25' sont garantis d'être situés sur l'unité de support 110' après l'étape de découpe. Dans le cas ou le support n'est pas découpé en planchettes, le motif 25' peut être imprimé de manière décalée par rapport au dispositif électronique. Par exemple, le motif 25' peut constituer un motif complémentaire au dispositif électronique agencé pour indiquer la présence du dispositif électronique et faciliter ainsi sa lecture. Le motif 25' peut par exemple se présenter sous une forme annulaire indiquant en son centre la présence du dispositif électronique.

Comme représenté sur la figure 9, lorsque vue de dessus, la surface d'une unité 110' est supérieure à la surface du dispositif électronique et la totalité du dispositif électronique est située à l'intérieur de l'unité 110'. La découpe peut présenter une forme décorative, par exemple un motif géométrique tel qu'une ellipse, un cercle, un polygone, un rectangle, un carré, une étoile. Dans ce cas il résulte de la découpe registrée que le dispositif électronique est au repère par rapport à la forme de l'unité de support. En variante, la découpe peut définir un symbole d'écriture ou une image d'un objet reconnaissable.

Dans l'exemple illustré, une unité de support 110' ne comporte qu'un seul dispositif électronique 50' mais pourrait en comporter plus.

Lors d'une étape 9', les unités de support 110' sont introduites en machine à papier dans la dispersion de matière fibreuse pour la fabrication de tout ou partie d'articles, par exemple des documents de sécurité. Les unités de support peuvent être introduites en continu dans la machine à papier, c'est-à-dire sans stockage intermédiaire des fibres papetières. En outre, les unités de support peuvent être projetées vers la substance fibreuse encore humide et en défilement de manière à former un motif continu en bande. Comme décrit précédemment, le support intégrant plusieurs dispositifs électroniques peut également être découpé en ruban et introduit ainsi en machine à papier dans la dispersion de matière fibreuse. L'introduction des unités de support en bande ou l'introduction d'un support intégrant plusieurs dispositifs électroniques en forme de ruban implique une disposition localisée des dispositifs électroniques par rapport au document de sécurité ce qui facilite notamment la lecture des dispositifs électroniques. Lors d'une étape 10' on peut déposer, notamment par impression, une antenne booster sur l'article auquel une ou plusieurs unités de support sont intégrées.

Le document de sécurité comporte par exemple plusieurs dispositifs électroniques 50'. Chaque puce peut posséder un numéro unique, par exemple composé de deux lettres suivi de deux chiffres, et un numéro correspondant est inscrit sur le document. La lecture du document peut être authentifiée de manière unique en comparant le numéro inscrit sur le document à un code résultant par exemple de la concaténation des codes des puces présentes sur ledit document.

Dans une variante, le numéro inscrit sur le document consiste en la somme des codes des puces.

Lorsque le dispositif électronique est un microcircuit résonnant, chaque dispositif 50' renvoie à un détecteur à signal résonnant unique et document final possède un circuit résonnant global résultant de la somme de tous les circuits résonnants.

On va maintenant décrire deux exemples d'articles fabriqués à l'aide du procédé tel que décrit aux figures 5 à 9.

Dans le premier exemple, on fabrique un *voucher.* Lors de l'étape 1', on fabrique sur table plate une couche fibreuse avec 15 % de fibres synthétiques avec une épaisseur de 120 µm et un grammage de 100 g/m² avec dépose sur un côté de la couche fibreuse 10' d'une couche 30' d'adhésif thermoscellant dont l'épaisseur est de 15 µm et sur la face opposée 12' de la couche fibreuse 10' d'une couche de couleur blanche dans le visible et de couleur bleue sous ultra-violet. Cette couche d'impression 23' présente par exemple une épaisseur de 5 µm.

Lors de l'étape 5', il est procédé à la dépose d'au moins une puce 50' sur la face supérieure 31' de la couche d'adhésif 30' à l'aide d'un outil poseur-preneur, qui est par exemple celui commercialisé par la société DATACON.

Lors de l'étape 7', il est procédé au couchage sur les faces extérieures de la structure obtenue à l'issue de l'étape 5' par la méthode dite « lame d'air » d'une couche de vernis 70' et 71' thermoscellant d'épaisseur de 15 µm. Lors de l'étape 8', les unités de support 110' sont découpées par laser en forme d'étoile, le dispositif électronique 50' se situant de préférence au centre de l'étoile. En variante, il peut être procédé, lors de cette étape 8' selon le procédé de découpe divulgué dans la demande EP 1 718 441.

Le dispositif électronique 50' peut par exemple faire partie intégrante d'une inscription au repère sur l'unité de support 110', comme décrit dans la demande WO 2008/015363.

Enfin, lors de l'étape 9', les unités de support 110' sont introduites en continu sur une machine à papier table plate.

Selon un deuxième exemple, il est procédé à la fabrication d'un billet de banque. Lors de l'étape 1', on fabrique sur table plate une couche de support 10' avec 15 % de fibres synthétiques, une épaisseur de 100 µm et un grammage de 90 g/m².

Une couche d'un adhésif thermoscellant 30' d'épaisseur 15 µm est déposée sur la face supérieure de la couche fibreuse 10'.

Lors de l'étape 5', au moins un dispositif électronique est déposé sur la face supérieure 31' de la couche d'adhésif 30' à l'aide d'un outil preneur-poseur qui est par exemple commercialisé par la société DATACON. Préalablement à l'étape 8', des drapeaux de couleur bleu/blanc/rouge sont imprimés au repère des dispositifs électroniques 50' sur la couche d'impression 23'. Enfin, lors de l'étape 9', il est procédé au découpage par laser d'unités de support 110' ayant la forme de drapeau imprimé, le dispositif électronique 50' de chaque unité de support se situant au centre du drapeau. Lors de l'étape 9', les unités de support 110' sont introduites dans le cuvier de marche d'une machine à papier à forme ronde.

Un article ainsi obtenu comporte au moins un dispositif électronique et peut également comporter au moins un élément de sécurité dit « de premier niveau » et/ou au moins un élément de sécurité dit « de deuxième niveau » tels que mentionnés ci-dessus.

L'article peut en particulier comporter comme éléments de sécurité, entre autres :
- des colorants et/ou des pigments luminescents et/ou des pigments interférentiels et/ou des pigments à cristaux liquides, notamment sous forme imprimée ou mélangée à au moins une couche constitutive de l'article,
- des composants colorants et/ou des pigments photochromes ou thermochromes, notamment sous forme imprimée ou mélangée à au moins une couche constitutive de l'article,
- un absorbeur ultraviolet (UV), notamment sous forme enduite ou mélangée à au moins une couche constitutive de l'article,
- un matériau spécifique collecteur de lumière, par exemple du type « guide d'ondes », par exemple un matériau collecteur de lumière luminescent comme les films polymères à base de polycarbonate commercialisés par la société BAYER sous la dénomination LISA®,
- un film multicouche interférentiel,
- une structure à effets optiques variables à base de pigments interférentiels ou de cristaux liquides,
- une couche biréfringente ou polarisante,
- une structure de diffraction,
- une image embossée,
- des moyens produisant un "effet de moiré", un tel effet pouvant par exemple faire apparaître un motif produit par la superposition de deux éléments de sécurité sur l'article, par exemple par le rapprochement de lignes de deux éléments de sécurité,
- un élément réfractif partiellement réfléchissant,
- une grille lenticulaire transparente,
- une lentille, par exemple une loupe,
- un filtre coloré.
- un fil de sécurité incorporé par exemple dans la masse d'au moins une couche constitutive de l'article ou en fenêtre, comportant éventuellement une impression imprimée en positif ou en négatif, une fluorescence, un effet métallique, goniochromatique ou holographique, avec ou non une ou plusieurs parties démétallisées,
- un foil métallisé, goniochromatique ou holographique,
- une couche à effet optique variable à base de pigments interférentiels ou de cristaux liquides,
- un élément de sécurité plat et de format relativement petit tel qu'une planchette, visible ou non visible, notamment luminescent, avec ou sans dispositif électronique,
- des particules ou agglomérats de particules de pigments ou colorants de type HI-LITE, visibles ou non visibles, notamment luminescents,
- des fibres de sécurité, notamment métalliques, magnétiques (à magnétisme doux et/ou dur), ou absorbantes, ou excitables aux ultraviolets, le visible ou l'infrarouge, et en particulier le proche infrarouge (NIR),
- une sécurité lisible automatiquement ayant des caractéristiques spécifiques et mesurables de luminescence (par exemple fluorescence, phosphorescence), d'absorption de la lumière (par exemple ultraviolet, visible ou infrarouge), d'activité Raman, de magnétisme, d'interaction micro-ondes, d'interaction aux rayons X ou de conductivité électrique.

Un ou plusieurs éléments de sécurité tels que définis plus haut peuvent être présents dans l'article et/ou dans une ou plusieurs couches constitutives de l'article ou dans un ou plusieurs éléments de sécurité incorporés à l'article et/ou à une ou plusieurs couches constitutives de l'article, comme par exemple un fil, une fibre ou une planchette.

L'une au moins des couches constitutives de l'article peut aussi comporter un élément de sécurité de premier niveau tel qu'un filigrane ou un pseudo-filigrane se superposant au moins partiellement à une région translucide de l'article.

On entend par « filigrane ou pseudo-filigrane » selon l'invention, une image dessinée qui apparaît dans l'épaisseur de l'article.

Le filigrane ou pseudo-filigrane peut être réalisé de différentes manières connues de l'homme du métier.

Pour cela l'article peut comporter l'une au moins d'une couche fibreuse ou polymère, d'une sous-structure, d'une couche adhésive, d'une couche externe ou d'une couche entretoise telles que définies ci-après.

L'expression « comportant un » doit être comprise comme étant synonyme de « comportant au moins un », sauf lorsque le contraire est spécifié.

## Revendications

1. Procédé de fabrication d'un support (100 ; 100') intégrant au moins un dispositif électronique (50 ; 50'), ce support comportant au moins une couche fibreuse (10 ; 10') de papier ou de non-tissé incluant au moins 15 % en masse de fibres synthétiques, comprenant l'étape consistant à :
- introduire (5 ; 5') le dispositif électronique (50 ; 50') au moyen d'un outil preneur-poseur à un emplacement dépourvu de cavité de ladite couche fibreuse (10 ; 10'), en comprimant ladite couche fibreuse (10 ; 10'), de telle sorte qu'à l'issue de cette introduction, le dispositif électronique (50 ; 50') soit reçu dans le support (100 ; 100') sans générer de surépaisseur.

2. Procédé selon la revendication 1, dans lequel on choisit le dispositif électronique (50 ; 50') parmi les microcircuits intégrés à communication sans contact, les microcircuits à antenne intégrée sur une puce, les microcircuits résonnants, les micro transpondeurs et les micro transpondeurs photo activables, notamment par un faisceau laser.

3. Procédé selon l'une des revendications 1 ou 2, dans lequel le support (100 ; 100') comporte au moins une couche d'adhésif (30 ; 30') recouvrant la couche fibreuse (10 ; 10').

4. Procédé selon la revendication 3, dans lequel la couche d'adhésif (30 ; 30') est thermofusible ou comprend un adhésif sensible à la pression.

5. Procédé selon l'une des revendications 3 ou 4, dans lequel le support comporte au moins une couche intermédiaire (20 ; 20') entre la couche fibreuse (10 ; 10') et la couche d'adhésif (30 ; 30').

6. Procédé selon l'une quelconque des revendications précédentes, dans lequel le support (100 ; 100') comporte une couche d'impression (23 ; 23') dépourvue de fibres synthétiques.

7. Procédé selon l'une quelconque des revendications précédentes, dans lequel les fibres synthétiques de la couche fibreuse (10 ; 10') sont à base d'un mélange de polyamide et de polyester.

8. Procédé selon l'une quelconque des revendications précédentes, dans lequel la couche fibreuse (10 ; 10') comprend un latex en masse dont la température de transition vitreuse est comprise entre -40°C et +60°C.

9. Procédé selon l'une quelconque des revendications précédentes, dans lequel la couche fibreuse (10 ; 10') présente une compressibilité comprise entre 10 et 30 %.

10. Procédé selon l'une quelconque des revendications précédentes, dans lequel l'outil preneur-poseur est configuré pour chauffer le support (100 ; 100') et/ou le dispositif électronique (50 ; 50').

11. Procédé selon l'une quelconque des revendications précédentes, comportant l'étape selon laquelle on procède au couchage hors ligne ou en ligne d'un vernis thermoscellant (70', 71') sur l'une au moins de la face (31') de la couche d'adhésif (30') opposée à la couche fibreuse (10') et de la face (24') de la couche d'impression (23') opposée à la couche fibreuse (10').

12. Procédé selon l'une quelconque des revendications précédentes, comportant l'étape selon laquelle le support (100 ; 100') est découpé pour réaliser une ou des unités de support (110') de format relativement petit, notamment telles que des planchettes, chaque unité de support comprenant au moins un dispositif électronique.

13. Procédé de fabrication d'un document de sécurité comprenant un substrat fibreux, **caractérisé en ce qu'**il comprend une étape consistant à introduire une ou des unités de support (110'), de format relativement petit, obtenues selon la revendication 12 dans une dispersion de matière fibreuse destinée à former le substrat fibreux du document de sécurité dans une machine à papier.

14. Document de sécurité tel qu'un passeport, une carte d'identité, un permis de conduire, une carte à jouer ou à collectionner interactive, un moyen de paiement, notamment une carte de paiement, un bon d'achat ou un voucher, une carte de transport, une carte de fidélité, une carte de prestation, une carte d'abonnement, fabriqué par le procédé selon la revendication précédente.

15. Procédé d'authentification et/ou d'identification d'un document de sécurité comprenant un substrat fibreux obtenu selon la revendication 13,
dans lequel un code est affecté à chaque dispositif électronique de chaque unité de support, le document comportant au moins un identifiant inscrit sur le document, et dans lequel :
- on détermine un code résultant de l'association des codes des dispositifs électroniques du document de sécurité,
- on lit ledit identifiant inscrit sur le document de sécurité, par exemple visuellement ou automatiquement,
- on compare l'identifiant du document de sécurité avec le code résultant de façon à identifier et/ou authentifier l'article.

## Patentansprüche

1. Verfahren zur Herstellung eines Trägers (100; 100'), der mindestens eine elektronische Vorrichtung (50; 50') enthält, wobei der Träger mindestens eine Faserschicht (10; 10') aus Papier oder aus Nicht-Gewebe aufweist, das mindestens 15% synthetische Fasern bezüglich der Masse enthält, umfassend den folgenden Schritt:
Einführen (5; 5') der elektronischen Vorrichtung (50; 50') mittels eines Aufnahme-Ablage-Werkzeugs an eine Stelle ohne Aushöhlung der Faserschicht (10; 10') durch Drücken auf die Faserschicht (10; 10'), so dass die elektronische Vorrichtung (50; 50') am Ende des Einführungsvorgangs im Träger (100; 100') aufgenommen wird, ohne Überhang zu erzeugen.

2. Verfahren nach Anspruch 1, wobei die elektronische Vorrichtung (50; 50') ausgewählt ist aus den integrierten Mikroschaltungen zur berührungsfreien Kommunikation, den Mikroschaltungen mit integrierter Antenne auf einem Chip, den Resonanz-Mikroschaltungen, den Mikro-Transpondern und den fotoaktivierbaren Mikro-Transpondern, insbesondere durch einen Laserstrahl.

3. Verfahren nach einem der Ansprüche 1 oder 2, wobei der Träger (100; 100') mindestens eine Haftschicht (30; 30') aufweist, die die Faserschicht (10; 10') überdeckt.

4. Verfahren nach Anspruch 3, wobei die Klebeschicht (30; 30') heißschmelzhaftend ist oder ein druckempfindliches Haftmittel enthält.

5. Verfahren nach einem der Ansprüche 3 oder 4, wobei der Träger mindestens eine Zwischenschicht (20; 20') zwischen der Faserschicht (10; 10') und der Haftschicht (30; 30') aufweist.

6. Verfahren nach einem der vorhergehenden Ansprüche, wobei der Träger (100; 100') eine Aufdruckschicht (23; 23') ohne synthetische Fasern aufweist.

7. Verfahren nach einem der vorhergehenden Ansprüche, wobei die synthetischen Fasern der Faserschicht (10; 10') auf einer Mischung von Polyamid und Polyester basieren.

8. Verfahren nach einem der vorhergehenden Ansprüche, wobei die Faserschicht (10; 10') ein Latexmaterial in Masse aufweist, dessen Temperatur des Glasübergangs zwischen -40°C und +60°C liegt.

9. Verfahren nach einem der vorhergehenden Ansprüche, wobei die Faserschicht (10; 10') eine Komprimierbarkeit zwischen 10 und 30% aufweist.

10. Verfahren nach einem der vorhergehenden Ansprüche, wobei das Aufnahme-Ablage-Werkzeug dazu eingerichtet ist, den Träger (100; 100') und/oder die elektronische Vorrichtung (50; 50') zu erwärmen.

11. Verfahren nach einem der vorhergehenden Ansprüche, umfassend einen Schritt, bei dem die Beschichtung außerhalb oder innerhalb einer Linie mit einem Heißsiegellack (70', 71') auf mindestens einer Seite (31') der Klebeschicht (30') gegenüber der Faserschicht (10') und/oder der Seite (24') der Aufdruckschicht (23') gegenüber der Faserschicht (10') ausgeführt wird.

12. Verfahren nach einem der vorhergehenden Ansprüche, umfassend einen Schritt, bei dem der Träger (100; 100') zerlegt wird, um eine oder mehrere Trägereinheiten (110') von relativ kleinem Format, insbesondere solchem von Brettchen, zu schaffen, wobei jede Trägereinheit mindestens eine elektronische Vorrichtung umfasst.

13. Verfahren zur Herstellung eines Sicherheitsdokuments, das ein Fasersubstrat umfasst, **gekennzeichnet dadurch, dass** es einen Schritt umfasst, bei dem eine oder mehrere Trägereinheiten (110'), von relativ kleinem Format, die nach Anspruch 12 innerhalb einer Dispersion von Fasermaterial, das zum Bilden des Fasersubstrats des Sicherheitsdokuments bestimmt ist, erhalten wurden, in eine Papiermaschine eingeführt werden.

14. Sicherheitsdokument wie ein Reisepass, ein Personalausweis, ein Führerschein, eine Spielkarte oder interaktive Sammelkarte, ein Zahlungsmittel, insbesondere eine Zahlungskarte, ein Einkaufsschein oder ein Voucher, ein Fahrschein, eine Treuekarte, ein Schuldschein, eine Abonnementkarte, hergestellt nach dem Verfahren nach einem der vorhergehenden Patentansprüche.

15. Verfahren zur Authentifizierung und/oder Identifizierung eines Sicherheitsdokuments, das ein Fasersubstrat enthält, das nach Patentanspruch 13 erhalten worden ist,
bei dem jede elektronische Vorrichtung jeder Trägereinheit mit einem Code versehen ist, wobei das Dokument mindestens eine auf dem Dokument eingeschriebene Identifizierung enthält, und bei dem:
ein Code bestimmt wird, der sich aus der Verknüpfung von Codes von elektronischen Vorrichtungen des Sicherheitsdokuments ergibt,
die auf dem Sicherheitsdokument eingeschriebene Identifizierung gelesen wird, beispielsweise visuell oder automatisch,
die Identifizierung des Sicherheitsdokuments mit dem sich ergebenden Code verglichen wird, um auf diese Weise den Gegenstand zu identifizieren und/oder zu authentifizieren.

## Claims

1. A method for manufacturing a support (100; 100') integrating at least one electronic device (50; 50'), this support comprising at least one fibrous layer (10; 10') of paper or of non-woven including at least 15% by mass of synthetic fibers, comprising the step consisting in:
- introducing (5; 5') the electronic device (50; 50') by means of a pick-and-place tool at a cavity-free site of said fibrous layer (10; 10') by compressing said fibrous layer (10; 10'), in such a way that on completion of this introduction, the electronic device (50; 50') is received in the support (100; 100') without generating any extra thickness.

2. The method as claimed in claim 1, in which the electronic device (50; 50') is chosen from among contactless communication integrated microcircuits, microcircuits with integrated antenna on a chip, resonant microcircuits, micro-transponders and photo-activatable micro-transponders, in particular activated by a laser beam.

3. The method as claimed in one of claims 1 and 2, in which the support (100; 100') comprises at least one adhesive layer (30; 30') covering the fibrous layer (10; 10').

4. The method as claimed in claim 3, in which the adhesive layer (30; 30') is thermofusible or comprises a pressure-sensitive adhesive.

5. The method as claimed in one of claims 3 and 4, in which the support comprises at least one intermediate laser (20; 20') between the fibrous layer (10; 10') and the adhesive layer (30; 30').

6. The method as claimed in any one of the preceding claims, in which the support (100; 100') comprises a printing layer (23; 23') devoid of synthetic fibers.

7. The method as claimed in any one of the preceding claims, in which the synthetic fibers of the fibrous layer (10; 10') are based on a polyamide and polyester mixture.

8. The method as claimed in any one of the preceding claims, in which the fibrous layer (10; 10') comprises a bulk latex whose glass transition temperature lies between -40°C and +60°C.

9. The method as claimed in any one of the preceding claims, in which the fibrous layer (10; 10') exhibits a compressibility of between 10 and 30%.

10. The method as claimed in any one of the preceding claims, in which the pick-and-place tool is configured to heat the support (100; 100') and/or the electronic device (50; 50').

11. The method as claimed in any one of the preceding claims, comprising the step according to which the off-line or in-line coating of a thermosealing varnish (70', 71') on the one at least of the face (31') of the adhesive layer (30') opposite from the fibrous layer (10') and of the face (24') of the printing layer (23') opposite from the fibrous layer (10') is undertaken.

12. The method as claimed in any one of the preceding claims, comprising the step according to which the support (100; 100') is cut so as to produce one or more support units (110') of relatively small format, in particular such as flakes, each support unit comprising at least one electronic device.

13. A method for manufacturing a security document comprising a fibrous substrate, **characterized in that** it comprises a step consisting in introducing one or more support units (110'), of relatively small format, obtained as claimed in claim 12 in a fibrous material dispersion intended to from the fibrous substrate of the security document in a paper machine.

14. A security document such as a passport, an identity card, a driver's license, an interactive playing card or collectible card, a payment means, in particular a payment card, a gift token or a voucher, a transport card, a loyalty card, a benefit card, a subscription card, manufactured by the method as claimed in the preceding claim.

15. A method for authenticating and/or for identifying a security document comprising a fibrous substrate obtained as claimed in claim 13,
in which a code is assigned to each electronic device of each support unit, the document comprising at least one identifier registered on the document, and in which:
- a code is determined, resulting from the association of the codes of the electronic devices of the security document,
- said identifier registered on the security document is read, for example visually or automatically,
- the identifier of the security document is compared with the resulting code so as to identify and/or authenticate the article.
